# EUROPEAN PATENT SPECIFICATION

(11) **EP 0 753 470 B1**
(45) Date of publication and mention of the grant of the patent: **24.10.2001**
(21) Application number: 96300204.3
(22) Date of filing: 11.01.1996
(51) Int. Cl.: B65D 88/14, B65D 90/02

(54) **Fiber reinforced plastics container**
Container aus Faserverstärktem Kunststoff
Conteneur en plastique renforcé de fibres

(30) Priority: 14.07.1995 JP 17886895
(43) Date of publication of application: 15.01.1997
(73) Proprietor: TORAY INDUSTRIES, INC., Tokyo 103-8666 (JP)
(72) Inventor: Matsuura, Masashi, Masaki-cho, Iyo-gun, Ehime-Ken 791-31 (JP); Shimizu, Nobuhiko, Masaki-cho, Iyo-gun, Ehime-Ken 791-31 (JP); Yamagiwa, Masayoshi, Masaki-cho, Iyo-gun, Ehime-Ken 791-31 (JP); Ohnishi, Hiroshi, Masaki-cho, Iyo-gun, Ehime-Ken 791-31 (JP)
(74) Representative: Coleiro, Raymond

(56) References cited:
- EP-A- 0 389 467
- CH-A- 426 644
- DE-A- 2 636 557
- GB-A- 2 195 613
- US-A- 5 255 806
- PATENT ABSTRACTS OF JAPAN vol. 18, no. 528 (C-1258), 6 October 1994 & JP-A-06 184324 (MITSUBISHI KASEI), 5 July 1994,

## Description

The present invention relates to a container for aircraft (air cargo container), ships, freight trains, etc.

Among various means of transport, an airplane is large in gross factor, and since even slight reduction of weight is very effective, FRP (fibre reinforced plastics) has begun to be used in many portions of the airplane.

Containers for aircraft are absolutely necessary for carrying cargoes and passengers' baggage. One airplane, especially of an international line, is loaded with tens of containers, and a freight plane is loaded with more than 100 containers. So, the reduction in weight of containers is very economically effective. One presently used standard container of about 2 m in width, about 1.5 m in depth and about 1.6 m in height weighs about 90 kg. It is said that if the weight of the airplane of an international line can be reduced by 1 kg, the operation cost can be reduced by 10,000 yen per year. And yet, the reduction in weight of containers has been little achieved in these more than 20 years.

The presently used containers are made of aluminium alloy. They are roughly handled when loaded into or unloaded from aircraft, and there are many problems in that the containers and/or cargoes contained therein may be damaged (for example, the containers may be pierced by the forks of a forklift), and require frequent repair. Furthermore, recently with the increase of products directly transported from places of production to consumers, the demand for heat insulated transport is increasing. However, since aluminium alloy is high in heat conductivity, a heat insulating material must be used in a large quantity to enhance heat insulation capability, and dew condensation occurs on the outer surface as another problem.

On the other hand, most of the presently used containers have a structure of a box assembled by riveting or welding aluminium alloy plates onto an aluminium alloy frame together with reinforcing materials such as gussets. The above mentioned standard container is made by assembling more than 50 parts, and more than 500 rivets are used for assembling them. Such containers are heavy and require enormous time and cost for manufacture and assembling.

JP-A-07-257683 discloses a container the side walls and roof of which are of FRP, which container is lighter and has higher strength than widely used containers made of aluminium alloy. However, there is reference only to the relationship between thickness and maximum specific through load and no disclosure of actual thickness, nor of the fibre content of the FRP.

A Similar container is also disclosed in GB-A-2 195 613. In this container, two adjacent wall elements are together provided by a wall defining member which is a panel of integrally formed continuous FRP sheet material.

The preamble of claim 1 is based on this prior art.

Furthermore, the presently used containers must use a frame large in section modulus in order to secure their entire strength and rigidity, and this is also one of factors preventing a reduction in weight of containers.

As a method for solving problems associated with containers for aircraft as mentioned above, for example, JP-A-94-048480 proposes a container for aircraft, comprising sandwiched plates with FRP as the outer skin and a foam as the core, being provided with joining flanges around them, so that respectively adjacent sandwiched plates may be joined through the flanges to form a box structure. Since this container uses FRP, not requiring a large frame, it is lighter in weight than the conventional aluminium alloy containers, but because a frame is not used, the sandwiched plates used must be thick and the intended effects are decreased. Furthermore, because of the joining structure, the manufacture and assembly are time consuming and costly.

The present invention seeks to provide a solution to the above mentioned problems of conventional containers, and to provide a container which is not only lighter in weight and higher in strength, but also excellent in heat insulation capability.

The present invention seeks also to provide a container which, by solving the above problems, is ideal especially for aircraft, being lighter in weight, sufficiently strong and rigid as a container, and which can be manufactured and assembled in far less time and at far lower cost.

A container of the present invention can be used not only for aircraft, but also for ships, freight trains, etc.

The present invention provides a container comprising at least wall-defining members together providing, as wall elements of the container, at least side walls, a roof and a base, and optionally a door, at least each side wall-defining member comprising a panel of FRP sheet material, the thickness, t(mm), and fibre content, V_{f}(%), of which sheet material are 0.3 ≤ t ≤ 1.5 and 25 ≤ V_{f} ≤ 65, respectively. In preferred embodiments, the container additionally comprises a frame connecting together at least two wall-defining members.

Each side wall-defining member may be a panel comprising at least two FRP sheets spaced apart from one another so as to provide a gap therebetween, which gap may be empty or packed with a heat insulating material or contain a desiccant.

In a container embodying the present invention at least two adjacent wall elements (or respective adjacent portions thereof) of the container are together provided by a wall-defining member which is an FRP panel the sheet material of which is integrally formed, continuous FRP sheet material.

The two adjacent wall elements can both be side walls, or a side wall and the roof, or side wall and the base. Furthermore, three or more adjacent wall elements can also together be provided by an integrally formed continuous FRP panel, for example, two or more adjacent side walls or two or more adjacent side walls and the roof and/or base can together be provided by an integrally formed continuous FRP panel. Moreover, one or more side walls and the roof and the base can together be provided by an integrally formed continuous FRP panel.

The kinds of the reinforcing fibres of the FRP constituting the side walls can be glass fibre or polyaramid fibres, but carbon fibres more excellent in specific strength and specific modulus or a woven carbon fibre fabric is preferable. Especially if a woven carbon fibre fabric of 450 kgf/mm² or more in tensile strength σ_{f} and 1.7% or more in elongation δ is used, the resistance against piercing impact, of the FRP can be more than that of the aluminium alloy plate used in a conventional container.

The reinforcing fibres can be unidirectional, but as mentioned above, a woven fabric is recommended. The woven fabric is available as plain weave, satin weave or multiple weave, etc. as is well known, but plain weave is preferable, because it has a strong constraining force provided by weft and warp threads and can enhance the resistance, against piercing impact, of the side walls.

The matrix resin of the FRP can be any conventional thermosetting resin such as epoxy resin, unsaturated polyester resin, vinyl ester resin and phenol resin, or a thermoplastic resin such as nylon resin and acrylonitrile-butadiene-styrene (ABS) resin, but considering the possible occurrence of a fire, a flame proof phenol resin, flame proof epoxy resin or flame proof unsaturated polyester resin is preferable.

We find that it is impossible to achieve sufficient lightness and strength if the thickness or the fibre content of the FRP sheet material of the panel is not appropriate. The thickness of the sheet material is in the range of 0.3-1.5 mm inclusive. If the thickness of the sheet material is less than 0.3 mm, the strength of the FRP panel becomes lower than that of aluminium panel and is often broken with forks of forklifts. If the thickness is larger than 1.5 mm, its weight becomes equal to or larger than that of the side walls or roof made of aluminium alloy. On the other hand, the fibre content of the FRP is 25-65%, preferably 30-65%. If V_{f} is lower than 25%, in order to achieve predetermined strength, the thickness must be large and, accordingly, the container cannot be light. As for FRP of high fibre content, although high strength can be expected, uniform impregnation with matrix resin is difficult or substantially impossible during manufacture.

The side walls can be easily produced by any conventional FRP moulding method, such as autoclave moulding of cross-laminated unidirectional prepregs or laminated woven prepreg fabrics, RTM moulding or hand lay up with, for example, a preform of reinforcing fibres.

The roof and the base can also be made in the same manner as the side walls. However, the roof can also be a plate made of a synthetic resin such as a polyamide resin, polypropylene resin, polyethylene resin, polyvinyl chloride resin, acrylic resin or polycarbonate resin, because it is less liable to be flawed than the side walls. The base is preferably made of aluminium alloy because it contacts carrier equipment such as roller conveyors.

An integrally formed continuous FRP panel forming two or more adjacent wall elements can be obtained by autoclave moulding of unidirectional prepregs or woven prepregs laminated in a mould, or moulding a preform, etc. of reinforcing fibres by RTM or hand lay up method, or pultrusion method, or using the method described in US-A-4902215, or by any other general FRP moulding method.

Parts of the container constructed from materials other than FRP, such as any plate which may provide a wall element or portion thereof, or any frame or door which may be present can be made of any conventional metallic material such as aluminium alloy or steel, or any other material. However, it is preferable to use a material excellent in specific strength and specific modulus such as aluminium alloy as a metallic material.

FRP panels providing wall elements such as side walls, a roof and a base, and any integrally formed continuous FRP panel can be joined with the other parts directly by using rivets or an adhesive, or using rivets, welding or an adhesive optionally through a reinforcing element such as a gusset or frame.

When rivets or bolts are used, then when a container wall is hit with, for example, a fork of a forklift, the wall can be broken around the holes for rivets or bolts both in regions where the wall is hit but also in other regions, this being because the resistance, against piercing impact, of FRP is higher than that of aluminium plate. In such a case, the container cannot be repaired without replacing at least one wall and, thus, it is expensive. On the other hand, when a container is made of aluminium alloy plate, the breaking mode is merely such as to form a hole and the container can be repaired economically with a patch system.

To solve this problem associated with an FRP container, it is effective to provide around the holes for rivets or bolts portions thicker than other portions. For example, it is preferable to additionally laminate prepregs around the holes and mould in an autoclave. Alternatively, in a case where resin transfer moulding or hand lay up is applied, a desired amount of reinforcing fibres should be laminated additionally around the portions in which holes are to be made.

To enhance the strength and rigidity of the entire container, the integrally formed continuous FRP panel can also be an FRP sandwiched plate with the FRP panels as the outer skin. In this case, the core of the FRP sandwiched plate can be a foam made of a thermoplastic resin such as polyethylene, polypropylene, polyvinyl chloride, polystyrene or ABS, or a foam made of a thermosetting resin such as a phenol, epoxy, silicone or polyurethane resin, or a honeycomb made of aluminium or meta aramide resin.

To obtain a high strength, high rigidity container lighter in weight, the side walls, a roof and/or a base made of the FRP can partially be reinforced with a structural rib which may be a sandwiched structural rib or hollow structural rib with the FRP as the outer skin.

For example, the rib may be defined by a sheet material, preferably FRP, profiled so as to have an elongate central region disposed between elongate laterally disposed planar flanges each lying against and secured to a respective wall portion of the internal surface of the container, the sheet material of the rib being so profiled that the central portion thereof is spaced from the internal surface of the container so as to define a rib cavity, which may be either hollow or contain a core material.

Furthermore, such a sandwiched structural rib or hollow structural rib can be provided at the inside corner between the side walls, or between a side wall and roof, or between a side wall and base made of an integrally formed continuous FRP panel. In this case, since the sandwiched structural rib or hollow structural rib shares the load applied to the entire container, as does the frame of a conventional container for aircraft, the side walls, roof and/or base made of the FRP can be, and is preferably, thinner to provide a high strength, high rigidity container lighter in weight.

The sandwiched structural rib and hollow structural rib, can be assembled with the FRP panel as an outer skin and a sheet material of the rib as an inner skin within the container, peripheral flanges of the sheet material of the rib being secured to the internal surface of an FRP panel to hold the core of the rib laterally between the peripheral flanges and sandwiched between the inner and outer skins within the container. The rib may be secured to the FRP by adhesive applied at least between the flanges of the inner skin and the outer skin provided by the FRP. However, if they are formed together during moulding of the FRP, time for post-processing and assembling can be saved. In this case, the inner skin located on the side of the core opposite to the FRP is moulded beforehand.

The core of the sandwiched structural rib can be a foam made of a thermoplastic resin such as polyethylene, polypropylene, polyvinyl chloride, polystyrene or ABS, or a foam made of a thermosetting resin such as phenol, epoxy, silicone or polyurethane resin, or a honeycomb made of aluminium or meta aramid resin. For the inner skin, any material can be used, but considering adhesiveness and linear expansion coefficient, it is preferable to use a material similar to the integrally formed continuous FRP panel used as the outer skin.

The reinforcing fibres in the FRP can be of any form but it is preferable that they are continuous at least through one pair of adjacent sides. Since the use of continuous reinforcing fibres can secure the strength and rigidity of the entire container, the container can be made using thinner plates, to be greatly reduced in weight.

Preferred embodiments of the invention will now be described in more detail below with reference to the accompanying drawings and an illustrative Example. In the drawings:
Fig. 1 is a schematic perspective view showing a container, for storage in aircraft, which is a first embodiment of the present invention (NB: for clarity, elements of a frame thereof where located behind hidden walls of the container are not indicated);
Fig. 2 is a cross sectional view showing connecting portion in a container of Fig. 1 having a first alternative FRP panel construction;
Fig. 3 is a cross sectional view showing a connecting portion in a container of Fig. 1 having a second alternative FRP panel construction;
Fig. 4 is a schematic perspective view showing a container, for storage in aircraft, which is a second embodiment of the present invention;
Fig. 5 is a sectional view along the line X-X of Fig. 4; and
Fig. 6 is a sectional view showing an example of a sandwiched structural rib which may be present in a container embodying the present invention.

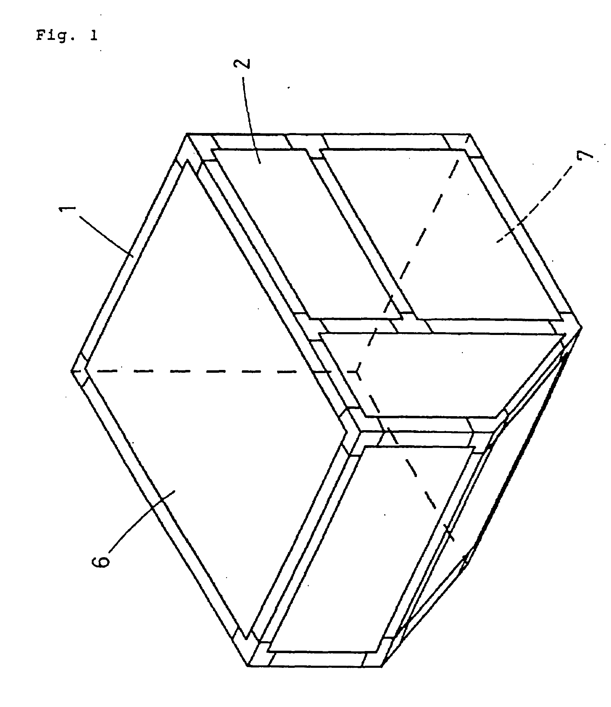

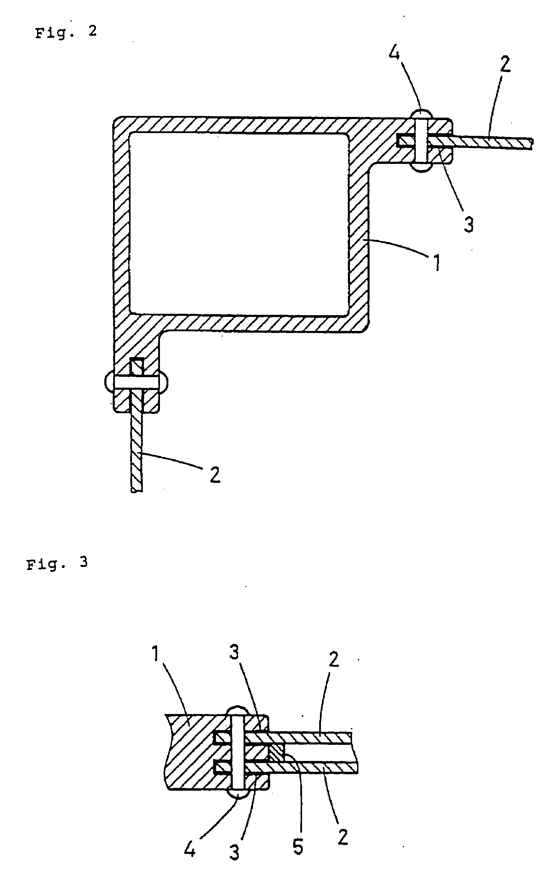

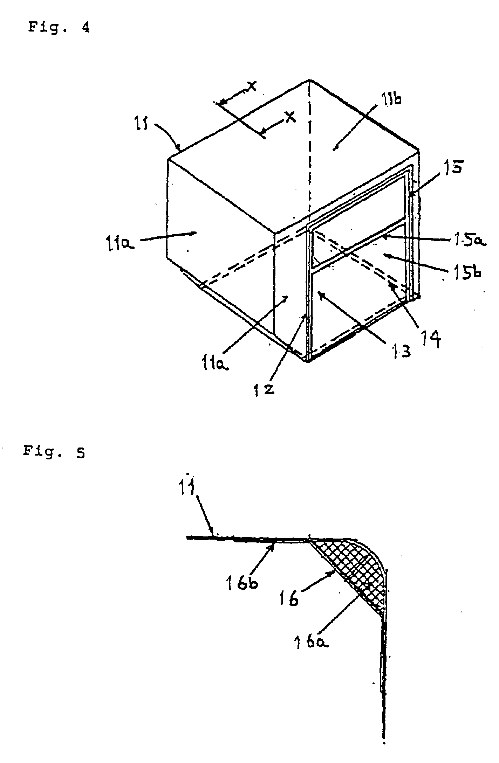

The container shown in Fig. 1 has side walls 2 and a roof 6 respectively made of FRP and a base 7 made of aluminium alloy installed in a frame 1 made of aluminium alloy. Each of the side walls 2, roof 6 and base 7 can be installed within the frame 1 in the manner shown in Fig. 2 where side walls are installed. Thus, side walls 2 are fitted in respective grooves formed in the frame 1 and fixed therein by an adhesive 3 applied to edge portions of the faces of the side walls 2 to be inserted, and by rivets 4. If the side walls 2 are provided by two FRP sheets spaced apart from one another they can be installed as shown in Fig. 3. In the example shown in Fig. 3, a gap is formed between the two FRP sheets of side wall 2, which gap contains a desiccant 5. The gap acts as a heat insulating layer, and may also be packed with a light-weight, preferably flame retardant heat insulating material such as glass wool or foamed synthetic resin.

The container shown in Fig. 4 has an integrally formed continuous FRP panel 11 providing a side wall portion 11a as one of four side walls, and a roof portion 11b. The container additionally comprises a door installing frame member 12 made of aluminium alloy, a base 13 made of aluminium alloy, a bottom frame member 14 made of aluminium alloy and a door 15. The door installing frame member 12 is riveted to the FRP 11 and is provided with means for opening, closing and locking the door. The door 15 has a door plate 15b made of FRP riveted to a door frame member 15a made of aluminium alloy, and is provided with means for opening, closing and locking the door. The FRP 11 and the base 13 are joined by riveting through the bottom frame member 14, and the door 15 is also riveted to the FRP 11 through the door frame member 15a and the door installing frame member 12.

Fig. 5 is a schematic vertical section showing a corner between the roof and a side wall of a container embodying the present invention. The corner, defined by an FRP panel 11 providing an outer skin contains a sandwiched structural rib 16. The rib 16 has a core 16a made of polyvinyl chloride foam attached to an FRP sheet 16b providing an inner skin so that the core 16a sits between and is surrounded by the inner and outer skins. Alternatively, a hollow structural rib effectively formed by removing the core 16a from the sandwiched structural rib 16 can be used.

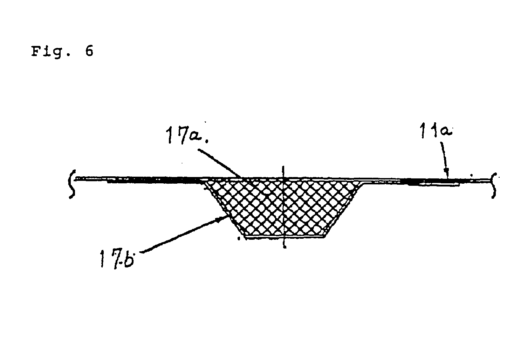

Fig. 6 shows a sandwiched structural rib which consists of a side wall (top or a base) 11a provided by an integrally formed FRP, a core 17a located under an outer skin provided by the side wall 11a, and between the side wall 11a and an inner skin provided by an FRP sheet 17a having laterally disposed flanges each in contact with the side wall 11a. Thus, again, the core 17a sits between and is surrounded by the inner and outer skins. The structural rib can be bonded to the side wall 11a later using an adhesive, etc., or can be moulded simultaneously when the FRP is moulded.

As described in more detail above, a container of the present invention has side walls, a roof, a base and preferably a frame. At least the side walls, preferably the side walls and roof, are made of FRP. Therefore, compared with a conventional container made of aluminium alloy, the container of the present invention is higher in strength and lighter in weight to allow more economical operation in service, and is also particularly excellent in heat insulation capability. The weight reduction effect reaches about 20% and, for example, if the side walls and roof are made of a carbon fibre reinforced plastics (CFRP) material, and if the frame is also made of CFRP, the effect reaches about 30%. Furthermore, if the side walls and roof are made of CFRP, the heat insulation capability is further enhanced because the heat conductivity of CFRP is 0.7 to 4.2 kcal/m·hr· °C, very low as compared with that of about 200 kcal/m·hr· °C for aluminium alloy. The resistance against piercing impact and heat insulation capability can be further enhanced by using a panel having a set of at least two, preferably parallel, FRP sheets for each side wall or roof, with a gap formed between the two sheets, and the heat insulation capability can be still further enhanced if the gap is packed with a heat insulating material or contains a desiccant.

If the container of the present invention has a set of at least two adjacent wall elements together provided by a wall-defining member which is a single integrally formed continuous FRP panel, it is higher in strength and lighter in weight, as compared with a conventional container, and so allows more economical operation, and can be manufactured and assembled spending far less time and cost.

For example, if four side walls, a roof and a door are formed as an integrally formed continuous carbon fibre reinforced plastic (CFRP) part, and the base, bottom frame member and door frame member are made of aluminium alloy, and these are joined using aluminium alloy rivets, then the number of parts constituting a similar container can be 25 which is about one half of that of a conventional container, and the number of rivets is also about 200 which is less than one half. The time taken for manufacture and assembling can be considerably decreased to two thirds of the time required for a conventional container.

Furthermore, if a sandwiched structural rib or hollow structural rib made of FRP, in part surrounded by a portion of the side walls or the roof or the base is provided at the inside corner between the side walls, or between a side wall and the roof, or between a side wall and the base of an integrally formed continuous FRP panel, the strength and rigidity of the entire container can be secured, to allow the elimination of the frame and the use of thinner plates, for further raising the % weight reduction.

## Claims

1. A container comprising at least wall-defining members together providing, as wall elements of the container, side walls (2), a roof (6) and a base (7), at least the or each side wall-defining member comprising a panel of FRP sheet material, wherein at least two adjacent wall elements of the container, including at least one side wall (2), are together provided by a wall-defining member which is a panel of integrally formed continuous FRP sheet material **characterised in that** the FRP sheet material has a thickness, t(mm) given by 0.3 ≤ t ≤ 1.5 and a fibre content, V_{f}(%), given by 25 ≤ V_{f} ≤ 65.

2. A container according to claim 1, wherein V_{f} (%) is given by 30 ≤ V_{f} ≤ 65.

3. A container according to claim 1 or claim 2, which additionally comprises a frame (1) connecting together at least two wall-defining members of the container.

4. A container according to claim 3, wherein the frame (1), is made of aluminium alloy.

5. A container according to any preceding claim, wherein all side walls (2) and the roof (6) are together provided by at least one wall-defining member comprising a panel of FRP sheet material.

6. A container according to any preceding claim, wherein each side wall-defining member is a panel at least two FRP sheets spaced apart from one another so as to provide a gap therebetween.

7. A container according to claim 6, wherein the gap is packed with a heat insulating material.

8. A container according to claim 6 or claim 7, wherein a desiccant (5) is present in the gap.

9. A container according to any preceding claim, wherein at least two of the adjacent wall elements are side walls (2).

10. A container according to any preceding claim, wherein at least two of the adjacent wall elements are one side wall (2) and the said roof (6) respectively.

11. A container according to any preceding claim, wherein at least two of the adjacent wall-elements are one side wall (2) and the said base (7) respectively.

12. A container according to claim 10 or claim 11, wherein at least one side wall (2), the roof (6) and the base (7) are together provided by a panel of integrally formed continuous sheet material.

13. A container according to any one of claims 1 to 10 wherein the base is made of aluminium alloy.

14. A container according to any one of claims 9 to 13, wherein the or at least one panel of integrally formed continuous FRP sheet material comprises at least two said sheets spaced apart from one another so as to provide a gap therebetween.

15. A container according to any one of claims 9 to 14, wherein the or at least one said panel of integrally formed continuous FRP sheet material is reinforced with a structural rib (16) comprising at least an inner skin (16b) of FRP sheet material, sheet material of the panel providing an outer skin (11), and the inner (16b) and outer skins (11) together defining a cavity therebetween.

16. A container according to claim 15, wherein the cavity contains a core material (16a) therein, which core material (16a) is thereby sandwiched between the inner and outer skins (16b, 11).

17. A container according to claim 15 or claim 16, wherein the structural rib (16) is located at an internal corner of the container defined by respective edge portions of adjacent wall elements together provided by the said panel.

18. A container according to any one of claims 9 to 17, wherein reinforcing fibres in the FRP are continuous through the at least one pair of adjacent wall elements.

19. A container according to any preceding claim, having, at least in the or each FRP panel thereof, holes for rivets or bolts and wherein the thickness of a portion of the or each FRP panel around each respective hole is thicker than other portions thereof.

20. A container according to any preceding claim, wherein reinforcing fibres in the or each FRP panel are carbon fibres of 450 kgf/mm² or more in tensile strength and 1.7% or more in elongation.

21. A container according to claim 20, wherein the or each FRP panel is reinforced with a woven fabric of carbon fibres.

22. A container according to claim 21, wherein the fabric is woven with a plain weave construction.

23. A container according to any preceding claim, wherein the matrix resin in the FRP of the or each FRP panel contains a flame proofing agent.

24. A container according to any preceding claim, suitable for storage in aircraft.

## Patentansprüche

1. Behälter, umfassend zumindest Wand-definierende Elemente, die gemeinsam als Wandelemente des Behälters Seitenwände (2), ein Dach (6) und eine Basis (7) bilden, wobei zumindest die oder alle Seitenwand-definierenden Elemente eine Platte aus FRP-Bahnmaterial umfassen, worin zumindest zwei benachbarte Wandelemente des Behälters, einschließlich zumindest einer Seitenwand (2), gemeinsam durch ein Wand-definierendes Element gebildet werden, das eine Platte aus einstückig geformten FRP-Endlosbahnmaterial ist, **dadurch gekennzeichnet, dass** das FRP-Bahnmaterial eine Dicke t (mm), die durch 0,3 ≤ t ≤ 1,5 gegeben ist, und einen Fasergehalt V_{f} (%) aufweist, der durch 25 ≤ V_{f} ≤ 65 gegeben ist.

2. Behälter nach Anspruch 1, worin V_{f} (%) durch 30 ≤ V_{f} ≤ 65 gegeben ist.

3. Behälter nach Anspruch 1 oder 2, der zusätzlich einen Rahmen (1) umfasst, der zumindest zwei Wand-definierende Elemente des Behälters miteinander verbindet.

4. Behälter nach Anspruch 3, worin der Rahmen (1) aus Aluminiumlegierung besteht.

5. Behälter nach einem der vorangegangenen Ansprüche, worin alle Seitenwände (2) und das Dach (6) gemeinsam aus zumindest einem Wand-definierenden Element gebildet sind, das eine Platte aus FRP-Bahnmaterial umfasst.

6. Behälter nach einem der vorangegangenen Ansprüche, worin jedes Seitenwanddefinierende Element eine Platte ist, die zumindest zwei FRP-Bahnen von der nächsten beabstandet ist, so dass ein Zwischenraum dazwischen gebildet wird.

7. Behälter nach Anspruch 6, worin der Zwischenraum mit einem wärmeisolierenden Material gefüllt ist.

8. Behälter nach Anspruch 6 oder 7, worin im Zwischenraum ein Trockenmittel enthalten ist.

9. Behälter nach einem der vorangegangenen Ansprüche, worin zumindest zwei der benachbarten Wandelemente Seitenwände (2) sind.

10. Behälter nach einem der vorangegangenen Ansprüche, worin zumindest zwei der benachbarten Wandelemente eine Seitenwand (2) und das Dach (6) sind.

11. Behälter nach einem der vorangegangenen Ansprüche, worin zumindest zwei der benachbarten Wandelemente eine Seitenwand (2) und die Basis (7) sind.

12. Behälter nach Anspruch 10 oder 11, worin zumindest eine Seitenwand (2), das Dach (6) und die Basis (7) gemeinsam durch eine Platte aus einstückig geformtem Endlosbahnmaterial gebildet sind.

13. Behälter nach einem der Ansprüche 1 bis 10, worin die Basis aus Aluminiumlegierung besteht.

14. Behälter nach einem der Ansprüche 9 bis 13, worin die zumindest eine Platte aus einstückig gebildetem FRP-Endlosbahnmaterial zumindest zwei der Bahnen umfasst, die voneinander beabstandet sind, um einen Zwischenraum dazwischen zu bilden.

15. Behälter nach einem der Ansprüche 9 bis 14, worin zumindest eine der oder alle Platten aus einstückig gebildetem FRP-Endlosbahnmaterial mit einer Strukturrippe (16) verstärkt ist/sind, die zumindest eine Innenhaut (16b) aus FRP-Bahnmaterial umfasst, Bahnmaterial der Platte eine Außenhaut (11) bildet und die Innen- (16b) und die Außenhaut (11) gemeinsam einen Hohlraum dazwischen definieren.

16. Behälter nach Anspruch 15, worin im Hohlraum ein Kernmaterial (16a) enthalten ist, wodurch sich das Kernmaterial (16a) in Sandwichanordnung zwischen der Innenund der Außenhaut (16b, 11) befindet.

17. Behälter nach Anspruch 15 oder 16, worin die Strukturrippe (16) an einer Innenecke des Behälters angeordnet ist, die durch jeweilige Kantenabschnitte benachbarter Wandelemente definiert wird, die gemeinsam von der Platte gebildet werden.

18. Behälter nach einem der Ansprüche 9 bis 17, worin Verstärkungsfasern im FRP kontinuierlich durch das zumindest eine Paar benachbarter Wandelemente verlaufen.

19. Behälter nach einem der vorangegangenen Ansprüche, der in zumindest einer der oder in allen FRP-Platten davon Löcher für Nieten oder Bolzen aufweist und worin die Dicke eines Abschnitts der oder jeder FRP-Platte um jedes jeweilige Loch dicker ist als die anderer Abschnitte davon.

20. Behälter nach einem der vorangegangenen Ansprüche, worin Verstärkungsfasern in der oder jeder FRP-Platte Kohlefasern mit einer Zugfestigkeit von 450 kp/mm² oder mehr und einer Bruchdehnung von 1,7 % oder mehr sind.

21. Behälter nach Anspruch 20, worin die oder jede FRP-Platte mit einem Gewebe aus Kohlefasern verstärkt ist.

22. Behälter nach Anspruch 21, worin das Gewebe mit einer Leinenbindungskonstruktion gewebt ist.

23. Behälter nach einem der vorangegangenen Ansprüche, worin das Matrixharz im FRP der oder jeder FRP-Platte ein Flammschutzmittel enthält.

24. Behälter nach einem der vorangegangenen Ansprüche, der zur Lagerung in Flugzeugen geeignet ist.

## Revendications

1. Conteneur comprenant au moins des membres définissant des parois formant ensemble, en tant qu'éléments de paroi du conteneur, des parois latérales (2), un toit (6) et une base (7), au moins le membre définissant une paroi latérale ou chaque membre comprenant un panneau d'un matériau en feuille de FRP, où au moins deux éléments adjacents de paroi du conteneur, comprenant au moins une paroi latérale (2) sont formés ensemble d'un membre définissant une paroi qui est un panneau d'un matériau en feuille de FRP continu intégralement formé, **caractérisé en ce que** le matériau en feuille de FRP a une épaisseur, t(mm), donné par 0,3 ≤ t ≤ 1,5 et une teneur en fibres, V_{f}(%), donnée par 25 ≤ V_{f} ≤ 65.

2. Conteneur selon la revendication 1, où V_{f}(%) est donnée par 30 ≤ V_{f} ≤ 65.

3. Conteneur selon la revendication 1 ou la revendication 2, qui comprend additionnellement un cadre (1) connectant ensemble au moins deux membres définissant une paroi du conteneur.

4. Conteneur selon la revendication 3, où le cadre (1) est fait d'un alliage d'aluminium.

5. Conteneur selon toute revendication précédente, où toutes les parois latérales (2) et le toit (6) sont formés ensemble d'au moins un membre définissant une paroi comprenant un panneau d'un matériau en feuille de FRP.

6. Conteneur selon toute revendication précédente, où chaque membre définissant une paroi latérale est un panneau d'au moins deux feuilles de FRP qui sont espacées l'une de l'autre afin de laisser un espace entre elles.

7. Conteneur selon la revendication 6, où l'espace est garni d'une matière d'isolement thermique.

8. Conteneur selon la revendication 6 ou la revendication 7, où un agent siccatif (5) est présent dans l'espace.

9. Conteneur selon toute revendication précédente, où au moins deux des éléments adjacents de paroi sont des parois latérales (2).

10. Conteneur selon toute revendication précédente, où au moins deux des éléments adjacents de paroi sont une paroi latérale (2) et ledit toit (6) respectivement.

11. Conteneur selon toute revendication précédente, où au moins deux des éléments adjacents de paroi sont une paroi latérale (2) et ladite base (7) respectivement.

12. Conteneur selon la revendication 10 ou la revendication 11, où au moins une paroi latérale (2), le toit (6) et la base (7) sont formés ensemble d'un panneau d'un matériau en feuille continue intégralement formé.

13. Conteneur selon l'une quelconque des revendications 1 à 10 où la base est faite d'un alliage d'aluminium.

14. Conteneur selon l'une quelconque des revendications 9 à 13, où le au moins un panneau de matériau en feuille continue de FRP intégralement formé comprend au moins deux desdites feuilles espacées l'une de l'autre afin de former un espace entre elles.

15. Conteneur selon l'une quelconque des revendications 9 à 14 où le ou au moins un dudit panneau d'un matériau en feuille continue de FRP intégralement formé est renforcé d'une nervure de structure (16) comprenant au moins une peau interne (16b) d'un matériau en feuille de FRP, le matériau en feuille du panneau formant une peau externe (11) et les peaux interne (16b) et externe (11) définissant ensemble une cavité entre elles.

16. Conteneur selon la revendication 15, où la cavité contient un matériau d'âme (16a), lequel matériau d'âme (16a) est ainsi pris en sandwich entre les peaux interne et externe (16, 11).

17. Conteneur selon la revendication 15 ou la revendication 16, où la nervure de structure (16) est placée à un coin interne du conteneur défini par des portions respectives de bordure d'éléments adjacents de paroi formés ensemble par ledit panneau.

18. Conteneur selon l'une quelconque des revendications 9 à 17, où les fibres de renforcement dans FRP sont continues sur la ou moins une paire d'éléments adjacents de paroi.

19. Conteneur selon toute revendication précédente ayant au moins dans le ou chaque panneau de FRP, des trous pour des rivets ou des boulons et où l'épaisseur d'une portion du ou de chaque panneau de FRP autour de chaque trou respectif est plus épaisse que dans d'autres portions de celui-ci.

20. Conteneur selon toute revendication précédente, où des fibres de renforcement dans le ou chaque panneau de FRP sont des fibres de carbone de 450 kgf/mm² ou plus de résistance à la traction et de 1,7% ou plus d'allongement.

21. Conteneur selon la revendication 20, où le ou chaque panneau de FRP est renforcé d'une étoffe tissée de fibres de carbone.

22. Conteneur selon la revendication 21, où l'étoffe est tissée avec une construction d'armure toile.

23. Conteneur selon toute revendication précédente, où la résine de la matrice dans FRP du ou de chaque panneau de FRP contient un agent ignifuge.

24. Conteneur selon toute revendication précédente, approprié pour le stockage dans un avion.
